# EUROPEAN PATENT APPLICATION

(11) **EP 1 426 892 A1**
(43) Date of publication of application: **09.06.2004**
(21) Application number: 03026110.1
(22) Date of filing: 13.11.2003
(51) Int. Cl.: G06F 17/60

(54) **Online postal market place**

(30) Priority: 14.11.2002 US 294885
(71) Applicant: PITNEY BOWES INC., Stamford, CT 06926-0700 (US)
(72) Inventor: Biasi, Theresa, Shelton, CT 06484 (US); Pintsov, Leon A., West Hartford, CT 06117 (US)
(74) Representative: HOFFMANN - EITLE

(57) **Abstract**

Systems and methods are provided to facilitate completion of a mailing. Information can be received from a mailer that is descriptive of one or more mailing requirements, and one or more mailpiece identifiers can be provided to the mailer based upon the information descriptive of the mailing. An indication of fulfillment of one or more mailing requirements associated with a mailpiece identifier can be received from one or more service providers. Payment can be received from the mailer, and remuneration can be forwarded to an exchange or one or more service providers for services related to the fulfillment of the one or more mailing requirements.

## Description

This invention relates generally to an online postal exchange, and, more particularly, to an exchange that facilitate a mailing by coordinating the provision of mailing related services and payment for mailing services rendered.

Currently, service provides are performing some of the functions of the post office. As this trend continues, one of the problems that will arise relates to coordinating mailing services among service providers. As options for delivery of a mailpiece increase, decisions and actions associated with a mailing can become increasingly complex. A Postal Process Supplier (PPS), such as a postal service or a package delivery service, may serve some areas or jurisdictions and not others, and may have different fees associated with performance of various required services. In addition, some PPS's may be capable of completing a mailing requirement of a certain magnitude or within a specified time period, and other PPS's may not be able to complete the mailing requirement within the specified time period.

One of the drawbacks of prior art systems is that mailings involving multiple mailpieces with multiple and/or diverse requirements can further increase the complexity of completing a mailing. For example, a discount may be available for presorted mailpieces, or a mailing may require various documents or articles be inserted into an envelope or other suitable mail package. Services involved in a mailing, therefore, may include, for example: insertion of materials into an envelope or other package; sorting of mailed items, pickup of mailed items; delivery of mailed items; or other services. Coordination of required services and payment for various services rendered can become complicated.

A combination of services required can also involve a combination of fees charged. A mailer or mailing entity may need to ascertain which combination of services and associated fees represents a best value for each mailing. Past experience with one PPS or another may also need to be factored into a decision as to which PPS to utilize to fill a current mailing requirement. In addition, a mailer and a PPS can incur significant costs in accounting for and paying for mail sent through a postal network.

Therefore, it would be advantageous to provide apparatus and methods that overcame the drawbacks of the prior art.

Accordingly, to alleviate problems inherent in the prior art, the present invention introduces systems and methods to facilitate completion of a mailing. Information can be received from a mailer that is descriptive of one or more mailing requirements and one or more mailpiece identifiers can be provided to the mailer based upon the information descriptive of the mailing. An indication of fulfillment of one or more mailing requirements associated with a mailpiece identifier can be received from one or more service providers. In some embodiments, payment can also be received from the mailer, and remuneration can be forwarded to the one or more service providers for services related to the fulfillment of the one or more mailing requirements.

Some embodiments can also include posting a request for a bid relating to fulfillment of one or more of the received mailing requirements and receiving one or more fulfillment bids from one or more service providers relating to all or a part of the fulfillment of the mailing requirements. A preferred fulfillment bid can be also determined. Information relating to the preferred bid will be provided to the mailer, and an indication of the mailer's approval or acceptance of the bid or bids will by provided by the mailer to one or more of the service providers.

In some embodiments, updated information relating to the mailing requirement, and associated with a mailpiece identifier, can be received from one or more service providers and provided to the mailer. For example, the updated information can include an indication that one or more mailpieces were delivered.

In still other aspects, the information descriptive of a mailing requirement can include a requested delivery time. Services required can include at least one of: pickup, insertion, induction, storage, sorting and transportation. In addition, a status for mailpieces included in a mailing can be determined. A dispute resolution can be initiated for any mailpiece whose status does not meet a related mailing requirement.

Other embodiments can include providing data descriptive of a mailing requirement to a postal exchange and receiving mailpiece identifiers based upon the mailing requirement from the postal exchange. One or more mailpieces can be provided to a postal process supplier, and an indication can be received from the postal exchange that a service associated with a mailpiece identifier has been completed. Payment can be provided to the postal exchange for completion of a service. The postal exchange may then distribute payment to one or more service providers.

In addition, embodiments can include receiving data descriptive of a bid relating to the mailing requirement and providing an indication of acceptance of the bid. An update on a service performed relating to the mailing requirement can also be received and utilized to reconcile with records with the mailpiece identifiers.

Still other embodiments can include receiving data descriptive of a mailing requirement and providing a bid to render services related to the mailing requirement. An indication to render one or more services associated with one or more mailpiece identifiers can be received, and an update of a service rendered and its relation to one or more mailpiece identifiers can be provided. A charge can be submitted relating to fulfillment of a service, and payment can be received based upon the charge submitted.

Therefore, it should now be apparent that the invention overcomes the problems of the prior art. Additional aspects and advantages of the invention will set forth in the description that follows, and, in part, will be obvious from the description, or may be learned by practice of the invention. Various features and embodiments are further described in the following figures, descriptions and claims.

The accompanying drawings illustrate presently preferred embodiments of the invention, and together with the general description given above and the detailed description given below, serve to explain the principles of the invention. As shown throughout the drawings, like reference numerals designate like or corresponding parts.

Fig. 1 illustrates a block diagram of some embodiments of the present invention.

Figs. 2a-2e illustrate method steps that can be completed in some embodiments while practicing the present invention.

Fig. 3 illustrates a block diagram of a postal accounting and payment exchange.

Fig. 4 illustrates an exemplary database that can be utilized while practicing the present invention.

Fig. 5 illustrates a system diagram including components that can be utilized to implement the present invention.

Applicants have recognized that there is a market opportunity for systems and methods that help a user to arrange for services from one or more independent or unrelated service providers to facilitate a mailing. For example, a user may need to have multiple mailpieces delivered to multiple destinations overnight. These destinations may involve multiple international jurisdictions. Other services my also be required, such as, for example, insertion of contents into the mailpieces, pickup of mailpieces, sorting of the mailpieces, delivery of the mailpieces, or other service related to the mailpiece. As services are being completed, the user may also wish to have the capability to track each mailpiece, determine a current status for each mailpiece and provide payment to one or more service providers as each service associated with a mailpiece is completed. Some embodiments can include different services being completed by different service providers.

Embodiments of the present invention can facilitate completion of a mailing by providing a postal accounting and payment exchange. The exchange can associate a unique identifier with a mailpiece and provide tracking services related to each mailpiece. In some embodiments, the exchange can be accessible online. Payment can be received by the exchange for fulfillment of a mailing requirement and forwarded to an appropriate service provider according to the mailpiece identifier. These and other features will be discussed in further detail below, by describing a system, individual devices, and processes according to embodiments of the invention.

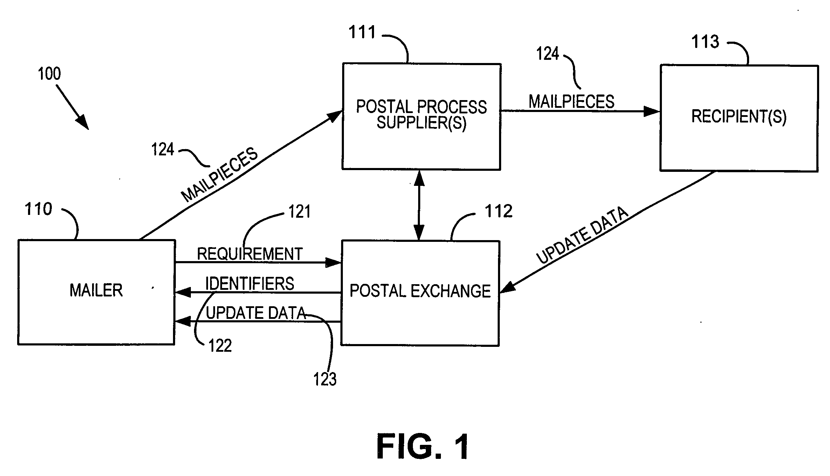

Referring now to Fig. 1, a block diagram illustrating entities that can be involved in the present invention. A mailer 110 can arrange with a PPS 111 for the provision of services related to a mailing via an online postal exchange 112. A mailer 110 can include an individual, a corporation, a company of another entity with a requirement related to one or more mailpieces. A PPS 111 can include, for example, a postal service (e.g., United States Postal Service, Canadian Postal Service, etc), a package delivery company (e.g., Federal Express®, United Parcel Service®, Airborne Express®, etc), a mailer preparation service company, or other provider of mailpiece related services. The exchange 112 can include, for example, an online site that is accessible by the mailer 110, the PPS 111, another PPS, and/or one or more recipients 113.

A mailing requirement 121 can be conveyed by the mailer 110 to the postal exchange 112 via an electronic communication or other communication means, such as for example, a fax, email message, XML transmission, voice message, or hard copy. The mailing requirement 121 can include, for example, a description of a number of mailpieces involved, a destination for each mailpiece, a size and weight of each mailpiece, a time each mailpiece needs to be delivered, any services in addition to delivery that are required, a preferred PPS 111, or other related information. The information descriptive of the mailing requirement 121 can be sent to a communications server at a postal exchange 112 by one or more user or client devices (e.g., personal computer, digital assistant) to inform the exchange of a pending mailing.

The mailer 110 can also provide payment to the postal exchange 112 if the postal exchange 112 can convey to the mailer 110 data including mail piece identifiers 122 and update data 123 relating to a mailing requirement 121. This data may be used to select a preferred or optimal combination of PPS's 111. In some embodiments, the postal exchange may receive update date from a PPS 111 and/or a recipient 113.

The mailer 110 provides mailpieces 124 to the PPS 111, which, in turn, may provide the mailpieces directly or indirectly to one or more recipients 113. The PPS 111 can receive information relating to a mailing from the postal exchange 112 and provide status updates, pricing bids, descriptions of services offered and other data to the postal exchange 112. The PPS 111 can also receive remuneration from the postal exchange 112 for services provided, or the exchange 112 may provide accounting information to the mailer 110 and/or the PPS 111 to be used to make payment directly to the PPS 111.

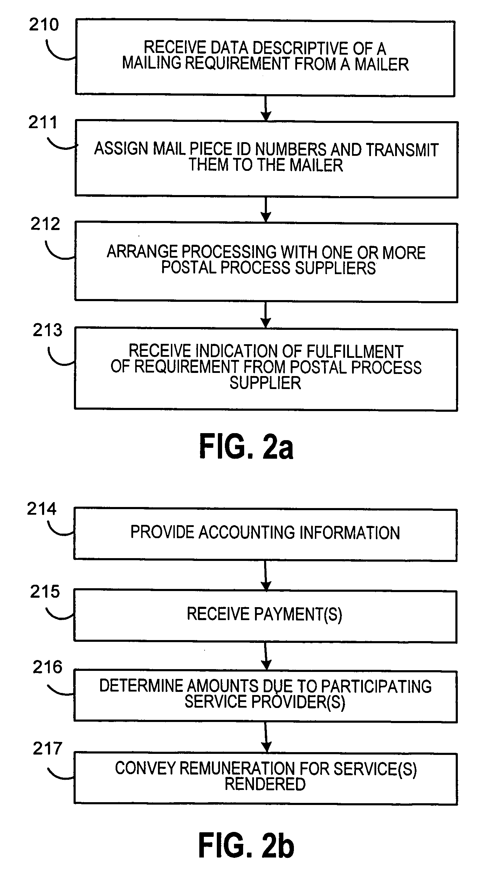

Reference is now made to Figs. 2a through 2e, where flow charts are shown that represent steps that can be taken while implementing various embodiments of the present invention. Any particular arrangement of elements in the flow charts in Figs 2a-2e is not meant to imply a fixed order to the steps; embodiments of the present invention can be practiced in any order that is practicable. In some embodiments, some or all of the steps of the methods presented can be implemented by a server or other device, as will be discussed in more detail below. In some embodiments, the methods may be implemented by a central service or entity that helps one or more mailers or mailing entities to arrange for fulfillment of one or more mailing requirements.

Data processing may be completed by a postal exchange 112 beginning at step 210, during which information descriptive of one or more mailing requirements 121 is received by the postal exchange 112.

At 211, the postal exchange 112 can respond to receipt of the mailing requirement by assigning a mailpiece identifier 122 to each mailpiece involved in the mailing requirement 121 and transmitting or otherwise providing the identifiers 122 to the mailer 110. Mailpiece identifiers 122 can include, for example, an alphanumeric string, a number, a barcode or other machine or human readable information or other indication. Preferably, the identifier 122 should remain unique within a mailing system at least for the time of fulfillment of the mailing requirement 121. An identifier 122 can be recycled and utilized more than once if desired, particularly when there is or may be a danger or risk of collision or overlap with other mail item identifiers. Mailpiece identifiers 122 can be transmitted, for example, by replying to an electronic mail message received from the mailer 110 or responding to a request entered into a web page programmed to receive data descriptive of a mailing requirement 121.

At 212 the postal exchange 112 can arrange for processing with one or more PPS's 111 to fulfill a mailing requirement 121 received, or the mailer 110 may select one or more PPS's or inform the postal exchange 112 of what it wants done. For example, a mailing requirement 121 may include insertion of materials into a mailpiece 124; sorting of mailpieces 124; and delivery of mailpieces 124. A postal exchange 112 may need to arrange with one PPS 111 to insert the materials and sort the mailpieces 124, and with another PPS 111 to deliver the mailpieces 124. The postal exchange 112 can coordinate services provided by more than one PPS 111.

Coordination of mail services provided can include maintaining data descriptive of a current status of each mailpiece 124 and conveying the current status of each mailpiece 124 to the mailer 110, PPS's 111, recipients 113, or other party that may need to know the status. Embodiments can include, for example, update information 123 with a current status being tracked according to the mailpiece identifier 124. The update information 123 can be posted on the exchange 112 and thereby become accessible to a mailer 110 and/or a PPS 111 involved, or other interested party. Update information 123 can be useful, for example, for receiving information from a first PPS 111 involved in processing a mailpiece 124 and communicating the status to another PPS 111 who may provide a service for a mailpiece 124 subsequent to a service provided by a first PPS 111.

At 213, the exchange 112 can receive an indication of fulfillment of a requirement 121, such as delivery of a mailpiece 124. The indication can be received from the appropriate PPS 111. Fulfillment of a requirement 121 can be associated with a mailpiece identifier 122 indicating for which mailpiece 124 an action has been completed. Fulfillment of a requirement, such as delivery of a mailpiece 124, can be indicated by, for example, contents of a transmission from a handheld computer operated by a mailpiece delivery person or the contents of any other electronic message.

In some embodiments, additional steps relating to payment and remuneration can also be implemented. For example, at 214 the postal exchange 112 may provide accounting information regarding accounting information to the mailer 110 and/or the PPS 111. Based on the accounting information, the mailer 110 may make payment(s) to the postal exchange 112 or directly to the PPS 111.

At 215, a payment can be received from the mailer 110 as compensation for fulfillment of a requirement 121 associated with a mailing, such as, for example, delivery of a mailpiece 124. In some embodiments, an exchange 112 can receive payment from the mailer 110 for fulfillment of a mailing requirement 121 upon conveyance of one or more mailpieces 124 involved to the PPS 111. Other embodiments can include any manner or schedule of payment acceptable to the exchange 112, the mailer 110 and/or PPS 111. Completion of a triggering event, such as completion of a requirement 121 associated with a mailpiece 124 or an agreement to fulfill a mailing requirement 121, can initiate payment to a PPS 111.

Payment can be effected, for example, through an electronic transfer of funds, automated clearinghouse transaction, credit card transaction, debit transaction, or any other known payment vehicle. In addition, in some embodiments, a postal exchange 112 may arrange for special processing with various PPS's 111 and take advantage of such arrangements to realize additional profit or to offer additional services to a mailer 110. For example, in some embodiments, discounted fees can be received by a postal exchange 112 from a PPS 111 for services arranged through the postal exchange 112. A profit can be realized on the resale of mailing related services to a mailer 110. Alternatively, or in addition to a realized profit, special pricing received by a postal exchange 112 from a PPS 111 can be passed along to a mailer 110 to encourage the mailer 110 to patronize the postal exchange 112.

At 216, the postal exchange 112 may determine payments or remuneration amounts due to one or more PPS's 111 that participated in the mailing. Different PPS's 111 may receive different compensation depending on the service(s) each provided.

At 217, remuneration can be conveyed to a PPS 111 for fulfillment of a service related to a mailing requirement 121. It should be noted that payments and remuneration can be accomplished according to whatever schedule is agreed to by the parties involved. Therefore, a prepayment prior to fulfillment of a mailing requirement 121 can be utilized or payment following fulfillment of one or more mailing requirements 121. Similarly, remuneration to a PPS 111 can take place prior to, during, or subsequent to, completion of a service related to a mailing requirement.

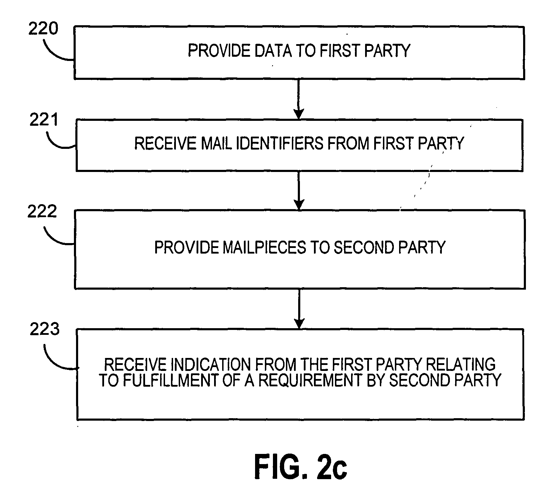

Referring now to Fig. 2c, steps that can be implemented by a mailer 110 are illustrated. At 220, the mailer 110 can provide data to a first party acting as a postal exchange 112. The data can be descriptive of a mailing, including one or more mailing requirements 121, payment terms, and/or other related information. At 221, the mailer 110 can receive mailing identifiers 122 for each mail piece 124 involved. In some embodiments, an indication of an associated mail piece identifier 122 can be fixed to each mailpiece 124. At 222 the mailer 110 can provide the mail pieces to a second party, such as, for example, a PPS 111 that has made an arrangement with the postal exchange 112 to fulfill one or more mailing requirements 121 associated with the mailpieces 124 provided.

At 223, the mailer 110 can receive an indication from the first party acting as a postal exchange 110 relating to fulfillment of a requirement 121 by the second party, such as the PPS 111.

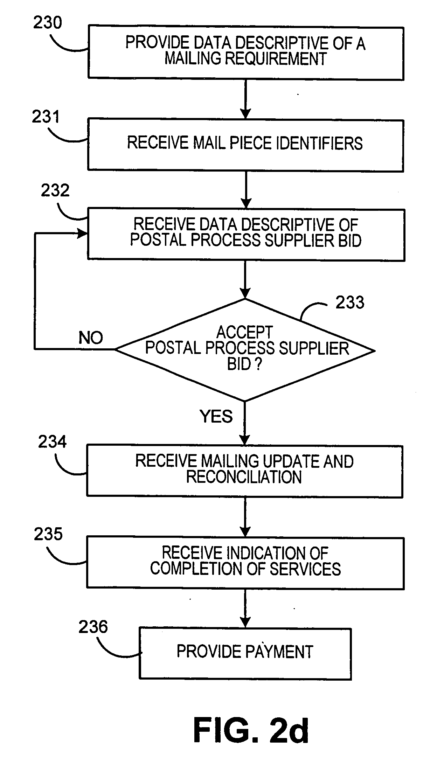

Fig. 2d illustrates steps that can be implemented by a mailer 110 or an associated user while practicing some embodiments of the present invention. At 230, the mailer 110 can provide data descriptive of a mailing requirement 121 and at 231 receive mailpiece identifiers 122 for each mailpiece 124 associated with the mailing requirement 121. At 232, the mailer 110 can also receive data descriptive of a bid submitted by a PPS 111. At 233, the mailer 110 can decide if the bid from the PPS 111 will be accepted. The bidding process can be useful, for example, for ascertaining a cost associated with individual requirements 121, or a comprehensive bid for all mailing requirements 121 included in a mailing.

If the bid is not accepted, the mailer 110 can receive additional data descriptive of another PPS bid at 232.

At 234, if the PPS 111 bid is accepted, the mailer 110 can also receive mailing update data 123 which can include a reconciliation of services provided according to one or more mailing requirements 121. At 235, the mailer 110 can receive an indication that one or more requirements 121 related to the mailing are completed, and at 236, the mailer 110 can provide payment for services rendered to fulfill the requirements 121.

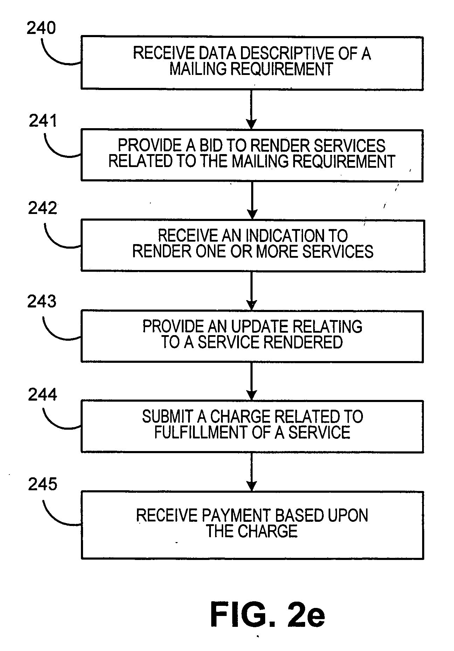

Fig. 2e illustrates a block diagram of steps that can be implemented by a PPS 111 while practicing some embodiments of the present invention. At 240, data descriptive of a mailing requirement 121 can be received, and at 241 the PPS 111 can provide a bid for rendering services related to the mailing requirement. At 242, the PPS 111 can receive an indication instructing the PPS 111 to render one or more services. At 243, the PPS 111 can provide an update relating to a service rendered, and at 244, submit a charge related to fulfillment of a service. At 245, the PPS 111 can receive payment based upon the charge submitted.

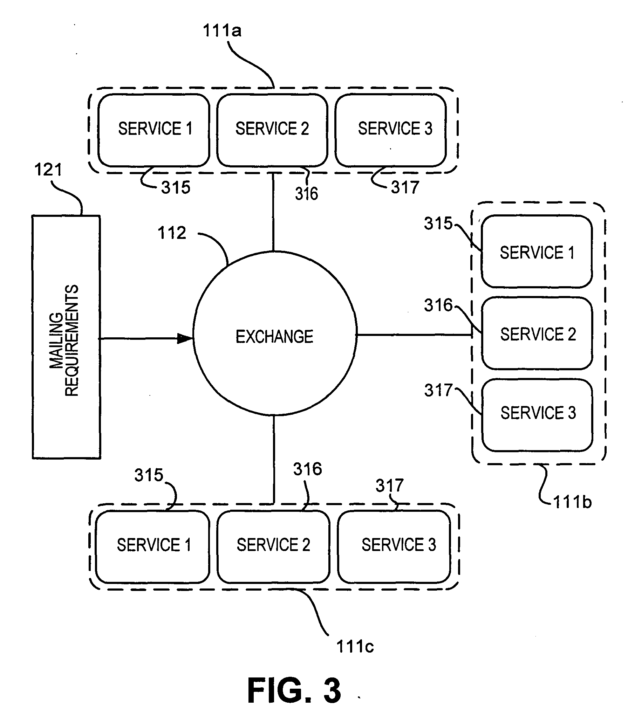

Referring now to Fig. 3, a block diagram illustrates various components that can be included in some embodiments of the present invention. For example, a postal exchange 112 can receive a mailing requirement 121 from a mailer 110 (not illustrated). The mailing requirement 121 can comprise one or more services 315-317 relating to mailpieces 124. For example, a first service 315 may include sorting mailpieces according to zip code. A second service 316 may include pickup of the sorted mailpieces, and a third service 317 may include delivery of the mailpieces 124. The exchange 112 can convey data descriptive of the requirements 121 to one or more PPS's 111 a-111c. The PPS's 111 a-111c can offer to provide one or more services 315-317 based upon the mailing requirements 121. An offer to provide a service 315-317 responsive to a mailing requirement 121 can include a bid, standard rate or other arrangement.

Periodically, the exchange 112 can receive updated information related to one or more of the services 315-317. The updated information can be received from a PPS 111a-111c and will typically include a status of a service 315-317 being provided. For example, an update may indicate that insertions have been included into each mailpiece 124 involved and that transportation or delivery is underway. Another update may include an indication that a mailpiece 124 has been delivered. Embodiments of an update can include determining a status for all mailpieces 124 included in a mailing.

Embodiments can also include initiating a dispute resolution to resolve an issue related to a mailing requirement 121. For example, if a status update indicates that a mailpiece 124 was not delivered on time, according to an agreed upon delivery time and date, or that a mailpiece 124 is missing, postal exchange 112 can initiate a dispute resolution or mediate a dispute resolution initiated by the PPS's 111 or mailer 110. The dispute resolution may include, for example, a refund of payments for services related to a deficient status or a determination of a value that should be reimbursed as compensation for a lost mailpiece 124.

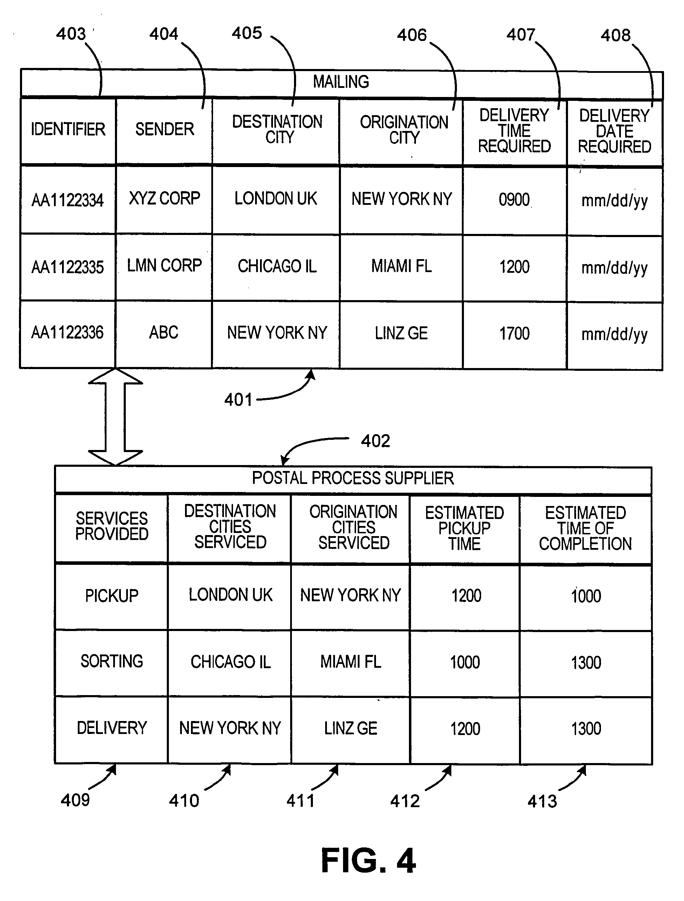

Referring now to Fig. 4, examples of data structures 401-402 that can be utilized in conjunction with the present invention are illustrated. The data structures 401-402 can be included, for example, in a database stored on a server at the postal exchange 112. A first data structure 401 related to a mailing can include data fields 403-408 relating to mailing requirements 314. The data fields 403-408 can include a field for storing an identifier 403, a field for storing a sender 404, a field for storing a destination city 405, a field for storing an origination city 406, a field for storing a required delivery time 407, a field for storing a required delivery date 408 as well as fields for storing other related data.

Another exemplary data structure 402 can include data fields related to a PPS 111. Exemplary data fields 409-413 that relate to the PPS 111 can include a data field for storing services provided 409. Services provided can include, for example pick up, sorting, insertion, induction, transportation, delivery or other mailing related service. Other data fields can include a data field for storing destination cities serviced 410, a data field for storing origination cities serviced 411, a data field for storing estimated pickup times 412, a data field for storing estimated time of completion of a service 413, as well as data fields for storing other relevant data.

Data structures can be linked or otherwise associated with each other by any technique known for relating data and according to any pertinent relationship. For example, a mailing database 401 can be linked to a PPS database 402 by matching a destination city 405 with a destination city serviced 410, or a delivery time required 407 with an estimated time of completion 413, or other pertinent relationship.

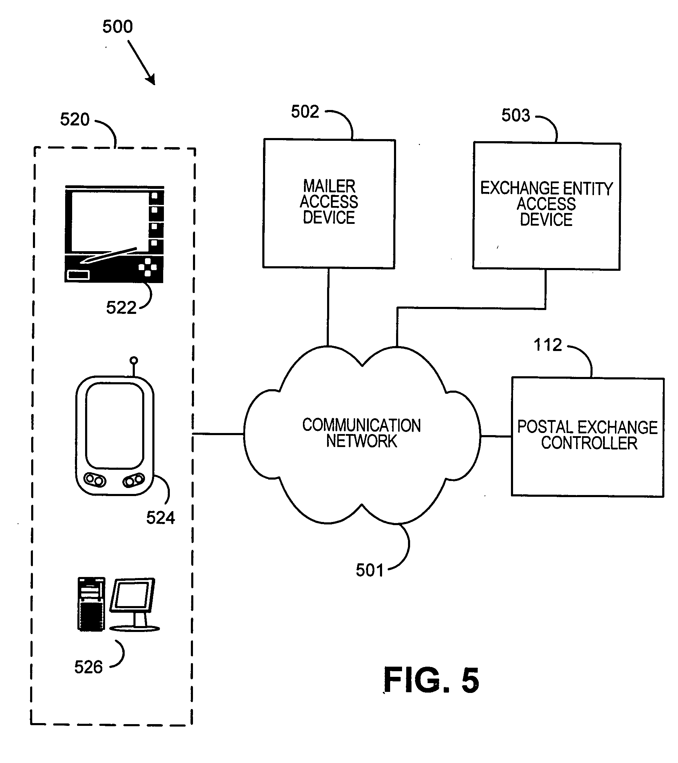

Fig. 5 illustrates a network diagram of a communication network, including basic components that can be utilized to'implement the present invention. The network 500 can include a computerized postal exchange controller 112 accessible via a distributed network 501, such as the Internet, or a private network using data exchange protocols. A user, such as a mailer 110, PPS 111 or other party interested in a mailing, can utilize a mailer access device 502, exchange entity access device 503, or other computerized network access device 520 to receive, input, transmit or view information processed in the postal exchange controller 112. A protocol, such as the transmission control protocol Internet protocol (TCP/IP) can be utilized to provide consistency and reliability.

The network access devices 502-503, 520 can include a processor, memory and a user input device, such as a keyboard and/or mouse, and a user output device, such as a display screen and/or printer. The network access devices 502-503, 520 can communicate with the postal exchange controller 112 to access data and programs stored on the postal exchange controller 112, or to run applications hosted on the postal exchange controller 112. The network access device 502-503, 520 may interact with the postal exchange controller 112 as if the postal exchange controller 112 were a single entity in the network 500. However, the postal exchange controller 112 may include multiple processing and database sub-systems, such as cooperative or redundant processing and/or database servers that can be geographically dispersed throughout the network 500. The postal exchange controller 112 can also include one or more databases 401-402 storing data relating to mailing requirements.

A user can access the postal exchange controller 112 using client software executed at a network access device 502-503, 520. The client software may include a generic hypertext markup language (HTML) browser, such as Netscape Navigator or Microsoft Internet Explorer, (a "WEB browser"). The client software may also be a proprietary browser, and/or other host access software. In some cases, an executable program, such as a Java™ program, may be downloaded from the postal exchange controller 112 to a network access device 502-503, 520 and executed at the network access device 502-503, 520. Other implementations include proprietary software installed from, a computer readable medium, such as a CD ROM. The invention may therefore be implemented in digital electronic circuitry, computer hardware, firmware, software, or in combinations of the above. Apparatus of the invention may be implemented in a computer program product tangibly embodied in a machine-readable storage device for execution by a programmable processor; and method steps of the invention may be performed by a programmable processor executing a program of instructions to perform functions of the invention by operating on input data and generating output.

The words "comprise," "comprises," "comprising," "include," "including," and "includes" when used in this specification and in the following claims are intended to specify the presence of stated features, elements, integers, components, or steps, but they do not preclude the presence or addition of one or more other features, elements, integers, components, steps, or groups thereof.

A number of embodiments of the present invention have been described. Nevertheless, it will be understood that various modifications may be made without departing from the spirit and scope of the invention. For example, a profile can be associated with a mailer 110 and utilized to select a preferred PPS 111 or determine other variables. Other variations relating to implementation of the functions described herein can also be implemented. Accordingly, other embodiments are within the scope of the following claims.

## Claims

1. A method for facilitating a mailing, the method comprising:
receiving information descriptive of one or more mailing requirements from a mailer;
providing one or more mailpiece identifiers based upon the information descriptive of the mailing to the mailer; and
receiving an indication of fulfillment of one or more mailing requirements associated with a mailpiece identifier from at least one service provider.

2. The method of claim 1, additionally comprising the steps of:
receiving payment from the mailer; and
forwarding remuneration for services related to the fulfillment of the one or more mailing requirements to the at least one service provider.

3. The method of claim 1, additionally comprising:
posting a request for bid relating to fulfillment of one or more of the received mailing requirements;
receiving one or more fulfillment bids from the at least one service provider relating to fulfillment of one or more of the received mailing requirements; and
determining a preferred fulfillment bid.

4. The method of claim 3, additionally comprising the steps of:
providing information relating to the preferred bid to the mailer; and
receiving an indication to proceed with fulfillment of the mailing requirement from the mailer.

5. The method of claim 1, additionally comprising:
posting a request for bid relating to fulfillment of one or more of the received mailing requirements;
receiving one or more fulfillment bids from the at least one service provider relating to fulfillment of one or more of the received mailing requirements;
providing information indicative of the one or more fulfillment bits to the mailer; and
receiving information from the mailer indicative of a preferred fulfillment bid.

6. The method of claim 1, additionally comprising the step of:
receiving an indication, from a service provider, of fulfillment of one or more additional mailing requirements.

7. The method of claim 1, additionally comprising the steps of:
receiving updated information relating to the mailing requirement and the mailpiece identifier; and
providing the updated information to the mailer.

8. The method of claim 7, wherein the updated information comprises an indication that one or more mailpieces were delivered.

9. The method of claim 1, additionally comprising the steps of:
receiving updated information relating to the mailing requirement and the mailpiece identifier; and
providing the updated information to one or more service providers.

10. The method of claim 1, additionally comprising the steps of:
receiving updated information relating to the mailing requirement and the mailpiece identifier; and
providing the updated information to a recipient.

11. The method of claim 1, wherein the information descriptive of a mailing requirement comprises a requested delivery time.

12. The method of claim 1, wherein the information descriptive of a mailing requirement comprises services comprising at least one of: pickup, insertion, induction, storage, sorting and transportation.

13. The method of claim 1, additionally comprising determining a status for all mailpieces comprising a mailing.

14. The method of claim 13, additionally comprising the step of:
initiating a dispute resolution for any mailpiece whose status does not meet the mailing requirement.

15. The method of claim 13, additionally comprising the step of:
mediating a dispute resolution regarding a mailpiece whose status does not meet the mailing requirement.

16. A method for a mailer to facilitate a mailing, comprising the steps of:
providing data descriptive of a mailing requirement to a postal exchange;
receiving mailpiece identifiers based upon the mailing requirement from the postal exchange;
providing one or more mailpieces to a postal process supplier;
receiving an indication from the postal exchange that a service associated with a mailpiece identifier has been completed;
receiving accounting information from the postal exchange regarding the service; and
providing payment for completion of the service to the postal exchange.

17. The method of claim 16, additionally comprising:
receiving data descriptive of a bid relating to the mailing requirement; and providing an indication of acceptance of the bid.

18. The method of claim 16, additionally comprising:
receiving an update of a service performed relating to the mailing requirement; and
reconciling the update with records comprising the mailpiece identifiers.

19. A method for facilitating provision of postal services by a service provider, the method comprising:
receiving data descriptive of a mailing requirement comprising mailpiece identifiers;
providing a bid to render services related to the mailing requirement;
receiving an indication to render one or more services associated with one or more mailpiece identifiers; and
providing an update of a service rendered and its relation to one or more mailpiece identifiers.

20. The method of claim 19, additionally comprising:
submitting a charge relating to fulfillment of a service;
receiving accounting information; and
receiving payment based upon the charge submitted.

21. A system for facilitating a mailing, comprising:
a memory;
a communication port; and
a processor connected to said memory and said communication port, said processor being operative to:
receive information descriptive of one or more mailing requirements from a mailer;
provide one or more mailpiece identifiers to the mailer based upon the information descriptive of the mailing;
send information descriptive of the one or more mailing requirements to a service provider;
receive a bid from the service provider regarding the one or more mailing requirements;
provide information descriptive of the bid to the mailer;
receive from the mailer an indication of an acceptance of the bid;
provide information to the service provider indicative of acceptance of the bid;
receive an indication of fulfillment of a mailing requirement associated with a mailpiece identifier;
receive payment for a fulfilled mailing requirement; and
forwarding payment for services related to the fulfilled mailing requirement.

22. The system of claim 21, wherein the communication port is operatively connected to a communications network and the information descriptive of one or more mailing requirements and the indication of fulfillment of a mailing requirement is received the via the communications network.

23. The system of claim 22, wherein the mailpiece identifiers are provided via the communications network.

24. The system of claim 23, wherein the communications network comprises the Internet.
